Europäisches Patentamt

European Patent Office

Office européen des brevets

(11) Veröffentlichungsnummer: **0 244 693 B1**

(12) **EUROPÄISCHE PATENTSCHRIFT**

(45) Veröffentlichungstag der Patentschrift: **29.07.92**

(21) Anmeldenummer: **87105860.8**

(22) Anmeldetag: **22.04.87**

(51) Int. Cl.⁵: **F23R  3/00**, F01D 5/18, F01D 5/28, F01D 21/04, F02K 1/82

(54) Heissgasüberhitzungsschutzeinrichtung für Gasturbinentriebwerke.

(30) Priorität: **06.05.86 DE 3615226**

(43) Veröffentlichungstag der Anmeldung:
**11.11.87 Patentblatt  87/46**

(45) Bekanntmachung des Hinweises auf die Patenterteilung:
**29.07.92 Patentblatt  92/31**

(84) Benannte Vertragsstaaten:
**BE CH FR GB IT LI**

(56) Entgegenhaltungen:
DE-A- 3 424 345
US-A- 4 432 207

(73) Patentinhaber: **MTU MOTOREN- UND TURBINEN-UNION MÜNCHEN GMBH Dachauer Strasse 665 Postfach 50 06 40 W-8000 München 50(DE)**

(72) Erfinder: **Krüger, Wolfgang Waldstrasse 11 W-8069 Reichertshausen(DE)**

**Beschreibung**

Die Erfindung bezieht sich auf eine Einrichtung nach dem Oberbegriff des Patentanspruchs 1.

Beispielsweise die Brennkammern moderner Gasturbinentreibwerke sind thermisch sehr hoch belastet, da für einen guten Wirkungsgrad des Triebwerks eine hohe Brennkammeraustritts- bzw. Turbineneintrittstemperatur erforderlich ist. Um u.a. den Kühlluftbedarf für die Brennkammerwand niedrig zu halten, wurden doppelwandige Bauweisen z.B. gemäß der DE-OS 34 24 345 gewählt, die aus einer Tragstruktur (metallischer Außenmantel) und einer innenliegenden Deckstruktur (z.B. schindelförmige, metallische oder keramische Auskleidung) besteht. Falls durch einen Schaden beispielsweise als Ursache örtlicher Überhitzung oder Werkstoffminderung oder dergleichen, eine Metallschindel teilweise schmilzt oder ein Teil einer Keramikschindel abbricht, ist der wenig gekühlte metallische Außenmantel der Brennkammer direkt dem Angriff der heißen Verbrennungsgase ausgesetzt. Es besteht die Gefahr des Durchbrennens des Außenmantels.

Um die geschilderte Gefahr der unzulässig hohen Aufheizung bzw. die Durchbrenngefahr des Brennkammeraußenmantels zu verringern, wurde schon vorgeschlagen, die Innenseite dieses Bauteils mit einer strahlungsreflektierenden Schicht z.b. aus Silber oder Platin (aufgedampft), zu versehen.

Ferner ist es schon bei stationären Gasturbientriebwerken vorgeschlagen worden, den Raum zwischen dem Außenmantel der Brennkammer und der inneren Auskleidung mit einer keramischen Isolierung sowie einer metallischen, federelastischen Beilage auszufüllen.

Auch im Wege dieser zuletzt genannten Maßnahmen und Brennkammerbauweise konnte den eingangs erwähnten Gefahren des Durchbrennens des metallischen Außenmantels - als Ursache einer Beschädigung oder eines Bruches der inneren Schindelstruktur der Brennkammer- nicht durchgreifend begegnet werden.

Aus der US-A- 4,432,207 ist ein Katalyt-Brenner für Gasturbinentriebwerke bekannt mit einer einen Heissgasstrom führenden Metallwand, die mit aus dem Verdichter entnommener Kühlluft beaufschlagt ist und Kühlluftöffnungen aufweist, die mit Zwischenräumen kommunizieren, welche zwischen einer die Metallwand auskleidenden Blechhaut ausgebildet sind, wobei die Metallwand durch mindestens ein hochtemperaturbeständiges Wandelement gegenüber der Heissgasströmung abgeschirmt ist, das mit der Blechhaut wenigstens einen Hohlraum einschließt.

Der Erfindung liegt die Aufgabe zugrunde, eine im Sinne des zuletzt genannten bekannten Falles ausgebildete und dem Oberbegriff des Patentanspruchs 1 zugrunde gelegte Einrichtung anzugeben, die trotz eines vergleichsweise geringen Kühlluftbedarfs einen optimalen Überhitzungsschutz der Metallwand erwarten läßt, worin die Gefahr des Durchbrennen der betreffenden Metallwand -als Ursache einer Beschädigung des die Heiß- bzw. Verbrennungsgase normalerweise gegenüber der Metallwand abschirmenden Wandelements- weitestgehend minimiert sein soll.

Die gestellte Aufgabe wird mit den Merkmalen des Kennzeichnungsteils des Patentanspruchs 1 erfindungsgemäß gelöst.

Die Erfindung kann nicht nur vorteilhaft bei Brennkammern von Gasturbinentriebwerken eingesetzt werden; sie kann vorteilhaft überall dort eingesetzt werden, wo metallischen äußeren Bauteilstrukturen, z.B. äußeren Gehäusebauteilstrukturen, in z.B. radial beabstandeter Nachbarschaft anderweitige Auskleidungen extrem hohen Temperaturen aus den Heißgasen ausgesetzt sind; so also z.B. bei Turbinenlaufschaufelummantelungen, die in für sich bekannter Weise mittels vom Verdichterende abgezapfter Luft gekühlt sind (Aufprallkühlsysteme), wobei der den Laufschaufelspitzen unmittelbar benachbarte Ummantelungsabschnitt also den extrem hohen Temperatureinflüssen ausgesetzt ist.

Die Erfindung eignet sich ferner für den Einsatz bei Nachbrennern von Gasturbinentriebwerken, in denen ganz extrem hohe Verbrennungstemperaturen auftreten, wobei also auch dort eine schindeloder schuppenartige Innenauskleidung (Hitzeschild) der metallischen äußeren Strahlrohrtragstruktur zugrunde gelegt werden kann.

Die Erfindung kann ferner vorteilhaft bei gekühlten Leit- oder Laufschaufeln von Gasturbinentriebwerken vorteilhaft eingesetzt werden, also bei Schaufelkonzepten, bei denen Kühlluft aus einem oder mehreren inneren Schaufelhohlräumen über eine oder mehrere Reihen von Prallkühlbohrungen in einer metallischen Innenwand gegen hoch-temperaturgefährdete Wandabschnitte des äußeren Schaufelmantels ausgeblasen werden soll, wobei es sich bei diesem extrem hoch-temperatur-belasteten Schaufelmantelpartien insbesondere um die Schaufelein- und Austrittskantenpartien handelt.

Z.B. auf die Brennkammer eines Gasturbinentriebwerkes bezogen, stellt sich der Erfindungsgegenstand hinsichtlich Ausbildung und Auswirkung vorteilhaft wie folgt dar.

Die äußere Tragstruktur der Brennkammer besteht aus einem metallischen Außenmantel, der mit einer Vielzahl von kleinen Radialbohrungen versehen ist und aus einem oder mehreren innenliegenden Blechteilen mit dünner Wandstärke. Die dünne Blechhaut ist örtlich mit der Tragstruktur formschlüssig verbunden, hat aber in weiten Bereichen einen radialen Abstand zum Außenmantel.

Die dünne Blechhaut verhindert den Luftzutritt durch die vielen kleinen Radialbohrungen in die Brennkammer. Erfindungsgemäß ist dabei der Schmelzpunkt des Blechhautwerkstoffs gleich oder niedriger als der des Außenmantels gewählt. Bei einem Schaden einer Metall- oder Keramikschindel treffen die heißen Verbrennungsgase hier zunächst auf die dünnwandige Blechhaut auf. Dieser Bereich der Blechhaut wird überhitzt und schmilzt. Dadurch wird eine Anzahl von Radialbohrungen des Außenmantels freigegeben. Die Verdichterluft strömt durch diese Bohrungen in die Brennkammer, kühlt dadurch im Bereich der schadhaften Schindel die Tragstruktur sehr intensiv und hält gleichzeitig die heißen Brenngase von dem Außenmantel fern. Bei der nächsten Inspektion der Brennkammer werden die schadhafte Schindel und/oder ein Teil der Blechhaut ersetzt.

Vorteilhafte Ausgestaltungen der Erfindung ergeben sich aus den Patentansprüchen 2 bis 14.

Anhand der Zeichnungen ist die Erfindung beispielsweise weiter erläutert; es zeigen:

Fig. 1   die Erfindung anhand eines von der Seite sowie teilweise aufgebrochen dargestellten Ringbrennkammer-Flammrchrabschnitts,

Fig. 2   die aufgebrochene Einzelheit x der Fig. 1, jedoch in vergrößertem Maßstab wiedergegeben,

Fig. 3   eine erste Abwandlung der vergrößert wiedergegebenen Einzelheit aus Fig. 1,

Fig. 4   eine zweite Abwandlung der vergrößert wiedergegebenen Einzelheit aus Fig. 1,

Fig. 5   eine Abwicklung gemäß Schnitt A-A der Fig. 2,

Fig. 6   die Einzelheit nach Fig. 2 unter Verdeutlichung der Auswirkungen der Erfindung,

Fig. 7   erfindungsgemäße Einzelheiten an einem als Längsschnitt dargestellten Nachbrennerstrahlrohr eines Turbinenstrahltriebwerks,

Fig. 8   eine die Auswirkungen der Erfindung verdeutlichende Einzelheit im Sinne von Fig. 6, hier jedoch auf den Nachbrenner nach Fig. 7 bezogen,

Fig. 9   eine die Auswirkungen der Erfindung an einer abschnittsweise sowie als Längsschnitt dargestellten Turbinenlaufschaufelummantelung verdeutlichend und

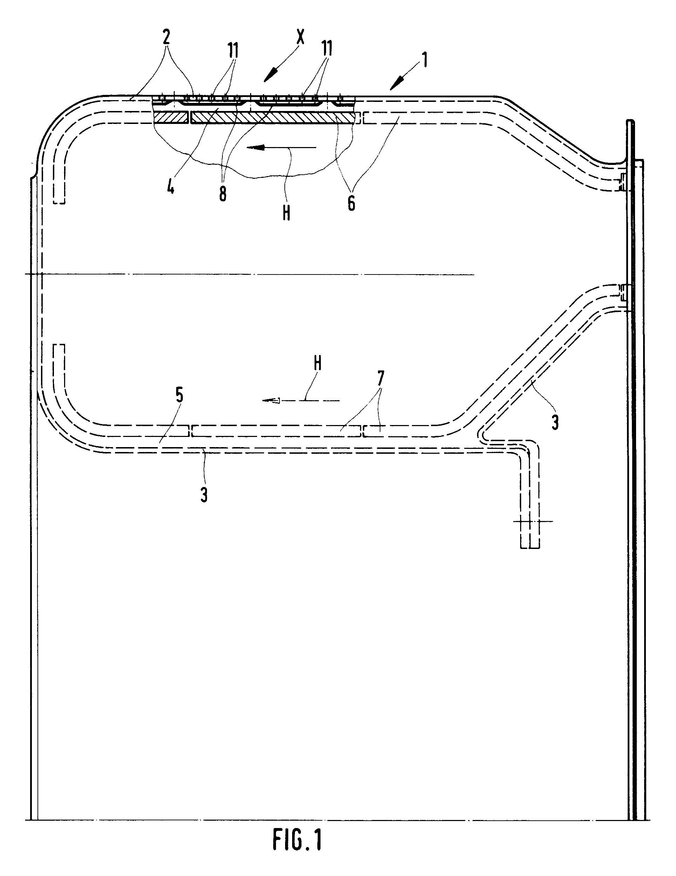

Fig. 1O   eine teilweise in Seitenansicht sowei teilweise entlang der gesamten Schaufelmantelhöhe aufgebrochen dargestellte Turbinenlaufschaufel mit erfindungsgemäßen Einzelheiten, durch Radialschnitt verkörpert.

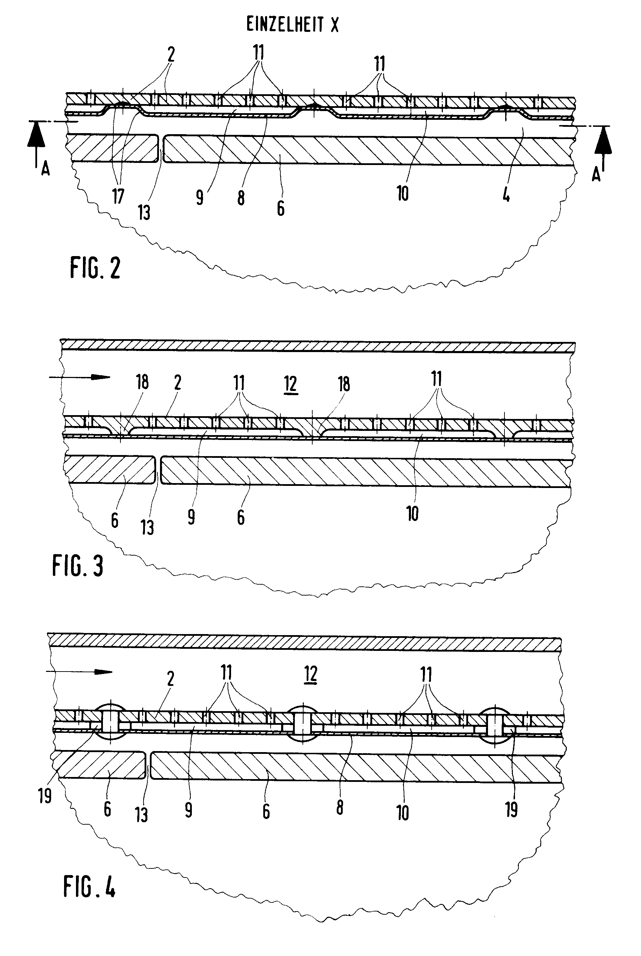

Fig. 1 erläutert die erfindungsgemäße Heigasüberhitzungsschutzeinrichtung für das Flammrohr 1 einer Ringbrennkammer von Gasturbinentriebwerken, bei der eine äußere und innere ringförmige Metallwand 2, 3 unter Einschluß von Hohlräumen 4, 5 durch äußere und innere Wandelemente 6, 7 gegenüber der Heißgasströmung H abgeschirmt sind; die Metallwände 2, 3 sollen mittels aus dem Verdichter entnommener Kühlluft beaufschlagt sein; gemäß Einzelheit x der Fig. 1 soll hier, am Beispiel der äußeren Metallwand 2 verdeutlicht, dieselbe innerhalb des Hohlraums 4 mit einer dünnen Blechhaut 8 ausgekleidet sein, welche mit der äußeren Metallwand 2 Zwischenräume 9, 10 (Fig. 2 bis 4) einschließt, die mit Kühlluftöffnungen 11 in der Metallwand 2 kommunizieren; dabei soll die Blechhaut einen Schmelzpunkt aufweisen, der demjenigen der Metallwand 2 gleich ist oder der unterhalb des Schmelzpunktes der Metallwand 2 liegt.

Die äußeren und inneren Wandelemente 6, 7 sollen ferner als schindel- oder schuppenartige Heißgasabschirmelemente aus einem hoch-temperaturbeständigen metallischen oder keramischen Werkstoff gefertigt sein.

Als keramische Werkstoffe für die Wandelemente 6, 7 kommen z. B. heißgepreßtes oder selbstgesintertes Siliziumkarbid oder gegebenenfalls reaktionsgesintertes Siliziumnitird infrage.

Als metallische Werkstoffe für die dünne Blechhaut 8 bzw. die metallische Ausführung der Wandelemente kommen z. B. zünder- und temperaturbeständige Werkstoffe infrage, die z. B. aus einer Nickelbasislegierung bestehen.

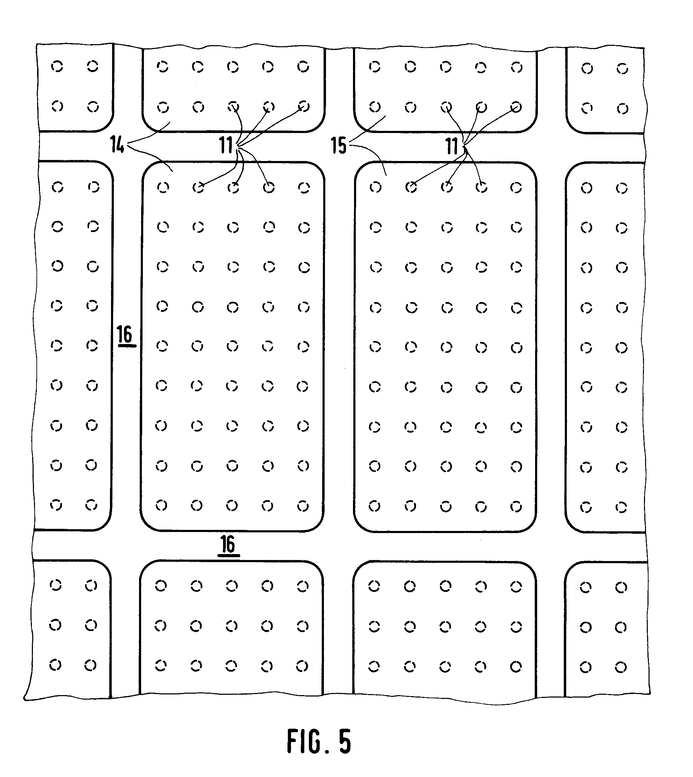

Zu Fig. 1 bis 4 wäre ferner zu vermerken, daß die Metallwände 2, 3 tragende Außen- oder Innenwände des Flammrohrs 1 sind und jeweils über einen zwischen Außengehäusestrukturbauteilen und dem Flammrohr 1 ausgebildeten äußeren, z. B. 12 (Fig. 3 und 4), oder inneren ringförmigen Sekundärluftkanal mittels am Hochdruckverdichterende entnommener Kühlluft beaufschlagt sind.

Erfindungsgemäß kann die innere Heißgasabschirmung in mehrere in Ax- und/oder Umfangsrichtung aufgeteilte Einzelwandelemente zergliedert sein, die unter Belassung von Abständen (z. B. Axialabstände 13, Fig. 2, 3 und 4) zwischen benachbarten Stoßkanten angeordnet sind.

Wie ferner aus Fig. 1 bis 4 hervorgeht, können die einzelnen inneren Wandelemente 6, 7 der betreffenden Flammrohrkontur folgend, gerade oder gewölbt ausgebildet sein. In nicht weiter dargestellter Weise können die Wandelemente 6, 7 in Umfangsnuten axial eingeschoben werden, wobei die Umfangsnuten an radial vorspringenden Stegen angeordnet sind, die wiederum integrale Bestandteile der betreffenden äußeren und inneren, tragenden metallischen Wände 2, 3 (Fig. 1) sein können.

Gemäß Fig. 2 bis 5 ist ferner erkennbar, daß jedem Zwischenraum 9, 10 eigene, mit Kühlluftbohrungen 11 versehene Belochungssektionen 14, 15 zugeordnet sein sollen. Nach Fig. 5 sind diese Belochungssektionen 14, 15 z. B. rechteckig sowie gleichförmig zueinander beabstandet ausgebildet und angeordnet, letzteres gilt auch für die beteffenden Zwischenräume 9, 10.

Die zuvor schon erwähnte dünne Blechhaut 8 soll ferner formschlüssig entlang der unbelochten Abschnitte 16 (Fig. 5) mit der betreffenden Metallwand 2 bzw. 3 verbunden sein.

Wie in Fig. 2 dargestellt, kann die Blechhaut 8 über örtliche Ausbiegungen 17 mit den unbelochten Abschnitten 16 der hier beispielsweise äußeren Metallwand 2 verbunden sein.

Nach Fig. 3 kann die Blechhaut 8 entlang nach innen vorspringender Stegenden (Stege 18) mit der betreffenden Metallwand verbunden sein.

Gemäß Fig. 4 kann die Blechhaut 8 unter Zwischenschaltung von Abstandsplatten oder-Streifen 19 mit der betreffenden Metallwand 2 verbunden sein. Die Streifen 19 bilden die seitliche Umgrenzung der Zwischenräume 9, 1O.

Ferner kann die Blechhaut 8 mit der betreffenden Metallwand 2 verschweißt (Fig. 2) oder verlötet (Fig. 3) oder vernietet sein (Fig. 4).

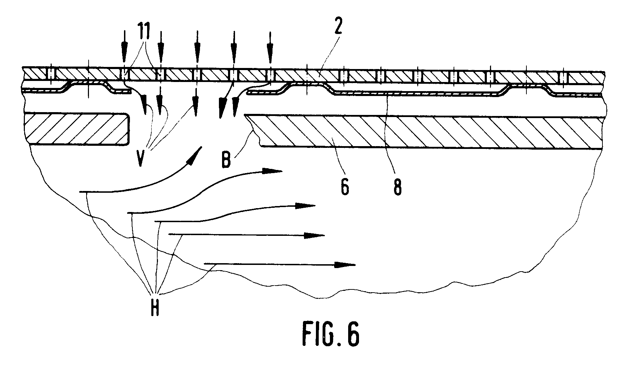

Fig. 6 erläutert dann am Ausführungsbeispiel nach Fig. 2 die Auswirkung der Erfindung im Falle eines Bruches (Abbrechstelle B) eines schindelförmigen Wandelements 6. In diesem Falle treffen die heißen Verbrennungsgase H zunächst auf die dünnwandige Blechhaut 8 auf. Dieser Bereich der Blechhaut 8 wird überhitzt und schmilzt. Dadurch wird eine Anzahl von Radialbohrungen 11 in der tragenden Metallwand 2 freigegeben. Gemäß Pfeilrichtung V strömt die Verdichterluft über diese Radialbohrungen 11 in den Verbrennungsraum des Flammrohrs 1, kühlt dadurch die Tragstruktur im Bereich des schadhaften Wandelements 6 sehr intensiv und hält gleichzeitig die heißen Verbrennungsgase H von der Metallwand 2 fern. Im Wege der nächsten Inspektion der Brennkammer kann das schadhafte Wandelement 6 sowie der schadhafte Teil der Blechhaut 8 ersetzt werden. Entgegen der Darstellung nach Fig. 1 ist beim Ausführungsbeispiel nach Fig. 6 eine von links nach rechts erfolgende Heißgasströmung H zugrundegelegt.

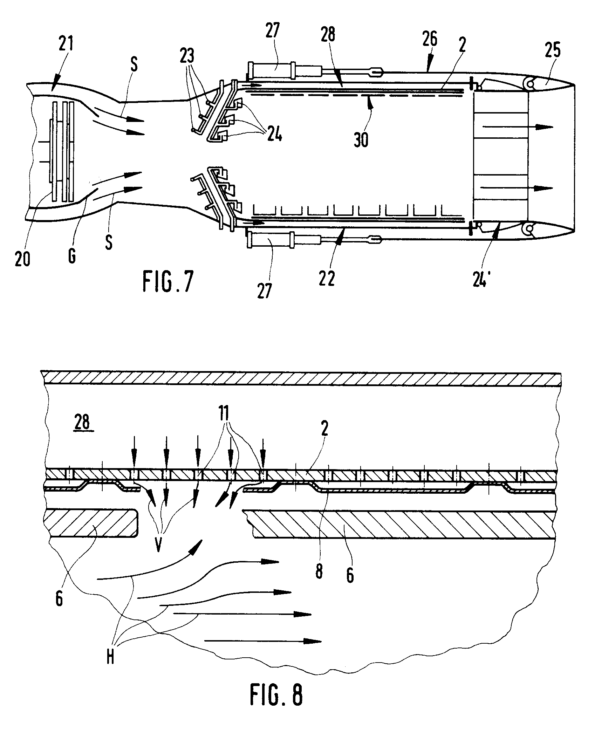

Fig. 7 und 8 veranschaulichen die Anwendung und Ausbildung der erfindungsgemäßen Einrichtung bei einem Nachbrenner eines Turbinenstrahltriebwerks. Das letztere kann z.B. als Mehr-Wellen-Zweistromtriebwerk ausgebildet sein. Dabei gelangt der die Niederdruckturbine 2O verlassende Heißgasstrom G zusammen mit einem aus dem Sekundärkanal 21 zugeführten Gebläseluftstrom S unter gegenseitiger Durchmischung in das axial nachgeschaltete Nachbrennerstrahlrohr 22. Für die Nachverbrennung des Heißgas-Luftgemisches im Strahlrohr 22 sind Brennstoffeinspritzringe 23 sowie Flammenhalter 24 vorgesehen, strömab derselben die Nach- bzw. Zusatzverbrennung stattfindet.

Am stromabwärtigen Ende des Nachbrennerstrahlrohrs 22 ist eine Verstellschubdüse 24' angeordnet, an deren um Querachsen verschwenkbare Düsenklappen 25 ein axial verschiebbares Düsenverstellband 26 angreift, das stromaufwärtig über seitlich außen befestigte pneumatische Verstellzylinder 27 betätigt wird.

Mit der Verstelldüse 24' kann der wirksame Schubdüsenaustrittsquerschnitt an den bei Einschaltung der Nachverbrennung sich vergrößernden Heißgasmassendurchsatz angepaßt werden.

Gemäß Fig. 7 und 8 bildet die Metallwand 2 nach der Erfindung eine rotationssymmetrische innere Umfangswand des Strahlrohrs 22 aus; zwischen Metallwand 2 und Strahlrohrwand ist ein rotationssymmetrischer Kühlluftzufuhrkanal 28 ausgebildet, der mit verhältnismäßig kühler Verdichter- oder Gebläseluft beaufschlagt ist, die aus dem Nebenstrom- oder Sekundärluftkanal 21 entlang der äußeren Randzone in den Kühlluftzufuhrkanal 28 abfließt. Ein innerer Hitzeschild 3O des Nachbrennerstrahlrohrs 22 besteht hier wiederum aus den zuvor schon erwähnten inneren Wandelementen 6. Die erfindungsgemäße Auswirkung der Ausbildung in Verbindung mit Fig. 8 ist also im Prinzip identisch mit derjenigen, wie sie bereits zu Fig. 6 schon ausführlich erläutert worden ist.

Im übrigen können für ein Nachbrennerstrahlrohr im Sinne der Fig. 7 auch die zuvor erörterten Erfindungsalternativen nach den Fig. 3, 4 und 5 sinngemäß zugrunde gelegt werden.

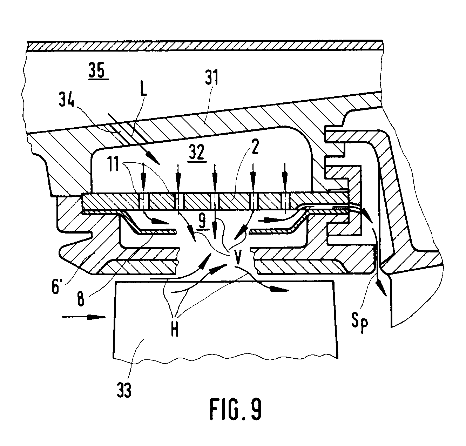

Fig. 9 veranschaulicht eine Anwendungsalternative der Erfindung als Hochdruckturbinenlaufschaufelummantelung, wobei die Metallwand 2 über einen zwischen dieser und einer Außengehäusewand 31 eingeschlossenen Ringraum 32 mittels vom Verdichterende entnommener Luft L beaufschlagt ist und wobei ein in Umfangssegmente aufgeteiltes Wandelement 6' den Spitzen der Laufschaufeln 33 der Hochdruckturbine im Turbinenheißkanal zugekehrt ist. Der Ringraum 32 ist über schräg angestellte Luftzufuhrbohrungen 34 mit einem äußerem Gehäuseringraum 35 in Verbindung, der mittels der vom Verdichterende entnommener Kühl- bzw. thermische Steuerluft beaufschlagt ist. Im Falle eines Bruches eines schindelförmigen, z.B. keramischen Wandelements 6' ergeben sich die zuvor zu Fig. 6 beschriebenen Auswirkungen in sinngemäßer Weise.

Gemäß Fig. 9 kann die aus dem Zwischenraum 9 bzw. Zwischenräumen -zwischen der Blechhaut 8 und der Metallwand 2-abfließende Kühlluft zumindest teilweise im Normalbetrieb als Sperrluft Sp dem Heißgaskanal -stromab der Laufschaufeln 33- zugeführt werden.

Fig. 1O verkörpert die Erfindung bei einer mittels aus dem Verdichter entnommener Luft gekühlten Turbinenlaufschaufel eines Gasturbinentriebwerks; dabei ist die Metallwand 2 Bestandteil des tragenden metallischen Kerns der Schaufel, wobei das der Heißgasströmung H unmittelbar ausgesetzte Wandelement 6 den äußeren Schaufelmantel bildet; die Kühlluft F wird hier z.B. vom Schaufelfuß 36 aus in einen Kernhohlraum 37 geführt und von dort über die in der Metallwand 2 enthaltenen Bohrungen 11 den Zwischenräumen 1O, 9, 38 zugeführt, die als Folge der Anordnung der auf die kernseitige Metallwand 2 aufgebrachten Blechhaut 8 in mindestens einem hier überwiegend nasenkantenseitigen Hohlraum 4 -zwischen der Metallwand 2 des Kerns und dem äußeren Wandelement 6- ausgebildet sind.

Die vorteilhafte Auswirkung der Erfindung im Falle eines Bruches oder einer Beschädigung des hier äußeren Wandelements 6 entspricht sinngemäß derjenigen, wie sie beispielhaft für eine Ringbrennkammer-Flammrohrwand im Sinne der Fig. 6 zuvor erörtert worden ist. Für die Laufschaufel nach Fig. 1O ist im übrigen zugrundegelegt, daß die normalerweise ausschließlich in die Zwischenräume 1O, 9, 38 abfließende Kühlluft, nach Kühlung des hoch-temperaturbelasteten Nasenkantenbereichs, z.B. seitlich außen in stromabwärtiger Richtung den Kern umströmt und dann auf geeignete Weise über Kanäle schaufelhinterkantenseitig in den Heißgasstrom abfließt.

Auch im Falle der Fig. 1O kann der Schaufelmantel (äußeres Wandelement 6) aus mehreren auswechselbaren Teilen gefertigt sein; auch im Falle der Fig. 1O kann ferner der hochtemperaturbelastete Schaufelmantel (Wandelement 6) aus einem geeigneten keramischen oder metallischen Werkstoff gefertigt sein.

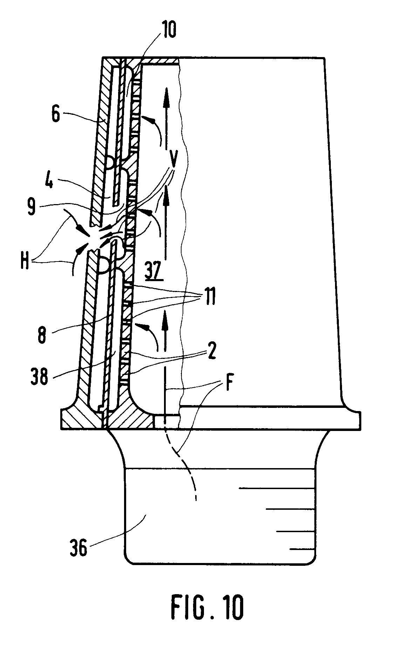

Das Laufschaufelkonzept nach Fig. 10 wäre im übrigen auch dann erfindungsgemäß praktikabel, wenn im Normalbetriebszustand (keine Schaufelmantelbeschädigung) von einer in den genannten Zwischenräumen 10, 9, 38 stillstehenden Luftströmung angegangen wird, wobei also die Zwischenräume, z. B. 9, 10 - wie im Falle der Ausführungsbeispiele nach Fig. 1 bis 6 - mittels vom Verdichter entnommener Druckluft gefüllt sind und erst im Schadensfalle des Mantels 6 der abschirmende und schützende Luftüberströmeffekt (Strömung V) - wie erwähnt - durchgreift.

Der Erfindungsgegenstand kann auch bei Turbinenleitschaufeln in der erwähnten Weise sinngemäß eingesetzt werden.

Sowohl im Falle einer Leitschaufel als auch im Falle einer Laufschafel nach Fig. 10 könnte im übrigen auch vom Vorhandensein mehrerer einzelner druck- und/oder saugseitig angeordneter Zwischenräume ausgegangen werden, ähnlich gleich örtlich verteilt, wie dies bei der Belochungssektionsverteilung nach Fig. 5 schon beschrieben und dargestellt ist.

**Patentansprüche**

1. Einrichtung zur Verhütung des Durchbrennens einer einen Heißgasstrom führenden Metallwand (2) eines Gasturbinentriebwerks, die mit aus dem Verdichter entnommener Kühlluft beaufschlagt ist und Kühlluftöffnungen (11) aufweist, die mit Zwischenräumen (9,10) kommunizieren, welche zwischen einer die Metallwand (2) auskleidenden Blechhaut (8) ausgebildet sind, wobei die Metallwand (2) durch mindestens ein hochtemperaturbeständiges Wandelement (6) gegenüber der Heißgasströmung abgeschirmt ist, das mit der Blechhaut (8) wenigstens einen Hohlraum (4) einschließt, dadurch gekennzeichnet, daß
   - die Blechhaut (8) den Luftzutritt durch die Kühlluftöffnungen (11) in den Hohlraum absperrt,
   - die Blechhaut (8) eine solche Wandstärke und einen solchen Materialschmelzpunkt aufweist, daß im Falle eines Bruches des Wandelements (6) die Kühlluftöffnungen (11) durch örtliches Aufschmelzen der Blechhaut (8) freigelegt sind und dabei eine gegen die Heißgasströmung (H) abfließende Luftabschirmung (V) der Metallwand (2) ausbilden.

2. Einrichtung nach Anspruch 1, dadurch gekennzeichnet, daß das mindestens ein Wandelement (6), als schindel- oder schuppenartiges Heißgasabschirmelement, aus einem hochtemperaturbeständigen metallischen oder keramischen Werkstoff gefertigt ist.

3. Einrichtung nach Anspruch 1 und 2, dadurch gekennzeichnet, daß jedem Zwischenraum (9,10) eine eigene, mit Kühlluftbohrungen (11) versehene Belochungssektion (14,15) zugeordnet ist.

4. Einrichtung nach Anspruch 3, dadurch gekennzeichnet, daß die Belochungssektionen (14,15) quadratisch oder rechteckig sowie gleichförmig zueinander beabstandet ausgebildet und angeordnet sind.

5. Einrichtung nach einem oder mehreren der Ansprüche 1 bis 4, dadurch gekennzeichent, daß die Blechhaut (8) formschlüssig entlang der unbelochten Abschnitte (16) mit der Metallwand (2) verbunden ist.

6. Einrichtung nach einem oder mehreren der Ansprüche 1 bis 5, dadurch gekennzeichnet, daß die Blechhaut (8) über Ausbiegungen (17) mit den unbelochten Abschnitten (16) der Metallwand (2) verbunden ist.

7. Einrichtung nach einem oder mehreren der Ansprüche 1 bis 6, dadurch gekennzeichnet, daß die Blechhaut (8) entlang nach innen vorspringender Enden von Stegen (18) mit der Metallwand (2) verbunden ist.

8. Einrichtung nach einem oder mehreren der Ansprüche 1 bis 5, dadurch gekennzeichnet, daß die Blechhaut (8) unter Zwischenschaltung von Abstandsplatten- oder -streifen (19) mit der Metallwand (2) verbunden ist.

9. Einrichtung nach einem oder mehreren der Ansprüche 1 bis 8, dadurch gekennzeichent, daß die Blechhaut (8) mit der Metallwand (2) verschweißt oder verlötet oder vernietet ist.

10. Einrichtung nach einem oder mehreren der Ansprüche 1 bis 9, vorzugsweise für eine Ringbrennkammer von Gasturbinentriebwerken, dadurch gekennzeichnet, daß die Metallwand (2,3) tragende Außen- oder Innenwand des Flammrohrs (1) ist und jeweils über einen zwischen Außengehäusestrukturbauteilen und dem Flammrohr ausgebildeten äußeren oder inneren ringförmigen Sekundärluftkanal (12) mittels am Hochdruckverdichterende entnommener Kühlluft beaufschlagt ist.

11. Einrichtung nach Anspruch 10, dadurch gekennzeichnet, daß die hochtemperaturbeständige Auskleidung in mehrere in Achs- und/oder Umfangsrichtung aufgeteilte, unter Belassung von Abständen zwischen benachbarten Stoßkanten ausgebildete Einzelwandelemente (6,7) zergliedert ist.

12. Einrichtung nach einem oder mehreren der Ansprüche 1 bis 9 oder nach Anspruch 11 für einen Nachbrenner eines Gasturbinenstrahltriebwerks, dadurch gekennzeichnet, daß die Metallwand (2) eine radial beabstandete innere Umfangswand eines Nachbrennerstrahlrohrs (22) ist, wobei Wandelemente (6) als schindel- oder schuppenförmiger Hitzeschild (30) ausgebildet sind.

13. Einrichtung nach einem oder mehreren der Ansprüche 1 bis 9 oder nach Anspruch 11, dadurch gekennzeichnet, daß sie vorzugsweise als äußere Hochdruckturbinenlaufschaufelummantelung ausgebildet ist, wobei die Metallwand (2) über einen zwischen dieser und einer Außengehäusewand (31) eingeschlossenen Ringraum (32) mittels vom Verdichterende entnommener Luft beaufschlagt ist, und wobei ein in Umfangssegmente aufgeteiltes Wandelement (6') den Laufschaufelspitzen der Hochdruckturbine im Turbinenheißgaskanal zugekehrt ist.

14. Einrichtung nach einem oder mehreren der Ansprüche 1 bis 9 für eine mittels aus dem Verdichter entnommener Luft gekühlte Turbinenleit- oder Laufschaufel eines Gasturbinentriebwerkes, dadurch gekennzeichnet, daß die Metallwand (2) Bestandteil des tragenden metallischen Kerns der Schaufel ist, wobei das der Heißgasströmung (H) unmittelbar ausgesetzte Wandelement (6) den äußeren Schaufelmantel bildet, und wobei die Kühlluft vom Schaufelkerninneren (37) aus über Belochungsabschnitte (Bohrungen 11) in der Metallwand (2) den Zwischenräumen (10,9,38) zugeführt wird, die als Folge der Anordnung der auf die kernseitige Metallwand (2) aufgebrachten Blechhaut (8) in mindestens einem Hohlraum (4) - zwischen der Metallwand (2) des Kerns und dem äußeren Wandelement (6) - ausgebildet sind.

## Claims

1. Device for preventing the burning-through of a metal wall (2) of a gas turbine engine, which wall (2) is provided to guide a hot gas stream, is acted upon by cooling air taken from the compressor, and comprises cooling air apertures (11) which communicate with intermediate spaces (9, 10) incorporated between the metal wall (2) and a sheet metal skin (8) lining the metal wall (2), the metal wall (2) being shielded with respect to the hot gas stream by at least one high-temperature resistant wall element (6) bounding at least one hollow space (4) with the sheet metal skin (8), characterised in that:
   - the sheet metal skin (8) prevents air entering the hollow space through the cooling air apertures (11);
   - the sheet metal skin (8) has a wall thickness and a material melting point such that, if there is a breakage of the wall element (6), the cooling air apertures (11) are exposed by local melting of the sheet metal skin (8) and thus form, for the metal wall (2), an air screen (V) flowing away against the hot gas stream (H).

2. Device according to Claim 1, characterised in that at least one wall element (6) is produced as a shingle or flake-like hot gas screening component, from a high-temperature resistant metal or ceramic material.

3. Device according to Claims 1 and 2, characterised in that a separate perforated section (14, 15), provided with cooling air bores (11), is associated with each intermediate space (9, 10).

4. Device according to Claim 3, characterised in that the perforated sections (14, 15) are constructed and disposed so as to be square or rectangular and at equal distances from one another.

5. Device according to one or more of Claims 1 to 4, characterised in that the sheet metal skin (8) is connected to the metal wall (2) in a positive-locking manner along the unperforated sections (16).

6. Device according to one or more of Claims 1 to 5, characterised in that the sheet metal skin (8) is connected to the unperforated sections (16) of the metal wall (2) by means of projecting sections (17).

7. Device according to one or more of Claims 1 to 6, characterised in that the sheet metal skin (8) is connected to the metal wall (2) along inwardly projecting ends of struts (18).

8. Device according to one or more of Claims 1 to 5, characterised in that the sheet metal skin (8) is connected to the metal wall (2) with the interposition of spacer plates or strips (19).

9. Device according to one or more of Claims 1 to 8, characterised in that the sheet metal skin (8) is welded, soldered or riveted to the metal wall (2).

10. Device according to one or more of Claims 1 to 9, preferably for an annular combustion chamber of gas turbine drive mechanisms, characterised in that the metal wall (2, 3) is the supporting outer or inner wall of the flame tube (1), and is acted upon in each case via an outer or inner annular secondary air duct (12) formed between outer housing structural parts and the flame tube by cooling air removed from the high-pressure compressor end.

11. Device according to Claim 10, characterised in that the high-temperature resistant lining is separated into a plurality of individual wall elements (6, 7) divided in the axial and/or peripheral direction and leaving spaces between adjacent border edges.

12. Device according to one or more of Claims 1 to 9 or according to Claim 11 for a reheater of a gas turbine jet engine, characterised in that the metal wall (2) is an inner peripheral wall of a reheater jet pipe (22) at a radial distance, wall elements (6) being formed as a shingle or flake-like heat shield (30).

13. Device according to one or more of Claims 1 to 9 or according to Claim 11, characterised in that it is preferably in the form of an external high-pressure turbine rotor blade casing, the metal wall (2) being acted upon via an annular space (32) enclosed between the metal wall and an outer housing wall (31) by air taken from the compressor end, and a wall element (6') divided into peripheral segments facing the rotor blade tips of the high-pressure turbine in the turbine hot gas duct.

14. Device according to one or more of Claims 1 to 9 for a turbine guide or rotor blade of a gas turbine drive mechanism cooled by means of air taken from the compressor, characterised in that the metal wall (2) is part of the supporting metal core of the blade, the wall element (6) directly exposed to the hot gas stream (H) forming the outer blade casing, and the cooling air being delivered from the blade core interior (37) via perforated sections (bores 11) in the metal wall (2) to the intermediate spaces (10, 9, 38) which, as a result of the arrangement of the sheet metal skin (8) mounted on the metal wall (2) on the core side, are formed in at least one hollow space (4) - between the metal wall (2) of the core and the outer wall element (6).

**Revendications**

1. Dispositif pour protéger d'un brûlage une paroi métallique (2), guidant un écoulement de gaz brûlants, d'un propulseur à turbine à gaz, paroi qui est soumise à l'action de l'air de refroidissement prélevé à partir du compresseur et qui présente des orifices de refroidissement (11), communiquant avec des espaces intermédiaires (9, 10), formés entre une pellicule de tôle (8) revêtant la paroi métallique (2), dispositif dans lequel la paroi métallique (2) est protégée par au moins un élément de paroi (6), résistant aux hautes températures, vis-à-vis de l'écoulement des gaz brûlants, élément (6) qui comprend avec la pellicule de tôle (8) au moins un espace creux (4), dispositif caractérisé en ce que :

- la pellicule de tôle (8) empêche le passage de l'air à travers les orifices d'air de refroidissement (11) dans l'espace creux,
- la pellicule de tôle (8) présente une épaisseur de paroi et un point de fusion tels que dans le cas d'une rupture de l'élément de paroi (6) les orifices d'air de refroidissement (11) sont libérés par la fusion locale de la pellicule de tôle (8) et forment dans ce cas une protection (V) de la paroi de métal (2) grâce à l'air s'écoulant contre le courant des gaz brûlants (H).

2. Dispositif selon la revendication 1, caractérisé en ce qu'au moins un élément de paroi (6) est usiné comme un élément de protection contre les gaz brûlants du type à bardage ou bardeau, en une matière métallique ou céramique résistant aux hautes températures.

3. Dispositif selon les revendications 1 et 2, caractérisé en ce qu'une section de perforations (14, 15) pourvue d'orifices d'air de refroidissement (11) est associée à chaque espace intermédiaire (9, 10).

4. Dispositif selon la revendication 3, caractérisé en ce que les sections de perforations (14, 15) ont une forme quadratique ou rectangulaire et sont montées à distance les unes des autres de façon régulière.

5. Dispositif selon une ou plusieurs des revendications 1 à 4, caractérisé en ce que la pellicule de tôle (8) est reliée par interpénétration de forme le long des sections non perforées (16) à la paroi de métal (2).

6. Dispositif selon une ou plusieurs des revendications 1 à 5, caractérisé en ce que la pellicule de tôle (8) est reliée par des coudes (17) aux sections non perforées (16) de la paroi de métal (2).

7. Dispositif selon une ou plusieurs des revendications 1 à 6, caractérisé en ce que la pellicule de tôle (8) est reliée à la paroi de métal (2) le long des extrémités d'entretoises (18) faisant saillie vers l'intérieur.

8. Dispositif selon une ou plusieurs des revendications 1 à 5, caractérisé en ce que la pellicule de tôle (8) est reliée à la paroi de métal (2) en interposant des plaques ou des bandes d'écartement (19).

9. Dispositif selon l'une ou plusieurs des revendications 1 à 8, caractérisé en ce que la pellicule (8) est soudée ou brasée ou rivée sur la paroi de métal (2).

10. Dispositif selon une ou plusieurs des revendications 1 à 9, de préférence pour une chambre de combustion annulaire de propulseurs à turbine à gaz, caractérisé en ce que la paroi de métal (2, 3) est une paroi porteuse extérieure ou intérieure du tube de flammes (1) et est soumise, par l'intermédiaire d'un canal d'air secondaire (12), de forme annulaire, extérieur ou intérieur, formé entre les éléments constitutifs de la structure extérieure de carter et le tube de flammes, à l'action de l'air de refroidissement prélevé à l'extrémité du compresseur haute pression.

11. Dispositif selon la revendication 10, caractérisé en ce que le revêtement résistant aux hautes températures est décomposé en plusieurs éléments de paroi individuels (6, 7) répartis dans le sens axial et/ou périphérique, en ménageant des écartements entre les bords d'attaque voisins.

12. Dispositif selon une ou plusieurs des revendications 1 à 9 ou selon la revendication 11 pour un post-brûleur d'un propulseur à turbine à gaz, caractérisé en ce que la paroi métallique (2) est une paroi périphérique intérieure, située radialement à distance, d'un tuyère de post-brûleur (22), dans laquelle les éléments de paroi (6) sont formés comme un bouclier thermique (30) du type à bardage ou bardeau.

13. Dispositif selon une ou plusieurs des revendications 1 à 9 ou selon la revendication 11, caractérisé en ce qu'il est de préférence formé comme une enveloppe extérieure d'aube mobile de turbine haute pression, dans laquelle la paroi de métal (2) est soumise par l'intermédiaire d'un espace annulaire (32) enfermé entre cette paroi et une paroi extérieure de carter (31) à l'action de l'air prélevé à partir de l'extrémité du compresseur et dans laquelle un élément de paroi (6') divisé en segments périphériques est tourné vers les pointes des aubes mobiles de la turbine haute pression dans le canal des gaz brûlants de la turbine.

14. Dispositif selon une ou plusieurs des revendications 1 à 9 par une aube fixe ou une aube mobile d'un propulseur à turbine à gaz refroidi au moyen de l'air prélevé à partir du compresseur, dispositif caractérisé en ce que la paroi de métal (2) est un composant du coeur métallique porteur de l'aube, tandis que l'élément de paroi (6) directement exposé à l'écoulement (H) des gaz brûlants forme l'enveloppe extérieure de l'aube et que l'air de refroidissement est amené de l'intérieur du coeur de l'aube (37) à partir des espaces intermédiaires (10, 9, 38) dans la paroi métallique (2), espaces intermédiaires qui sont constitués comme la suite de la disposition de la pellicule de tôle (8), montée sur la paroi métallique (2) située du côté du coeur, dans au moins un espace creux (4) - entre la paroi métallique (2) du coeur et l'élément extérieur de paroi (6).

FIG.1

EINZELHEIT X

FIG. 2

FIG. 3

FIG. 4

11

FIG. 5

FIG. 6

FIG.7

FIG. 8

FIG. 9

FIG. 10